# EUROPEAN PATENT APPLICATION

(11) **EP 4 659 922 A1**
(43) Date of publication of application: **10.12.2025**
(21) Application number: 24180699.1
(22) Date of filing: 07.06.2024
(51) Int. Cl.: B27N 1/02, B27N 3/00, C08L 75/12, C09J 189/00, B27N 3/24, C08G 69/10, B27N 3/02, B27N 3/04

(54) **METHOD FOR PRODUCING GLUE-COATED LIGNOCELLULOSIC MATERIAL**

(71) Applicant: Unilin, BV, 8710 Wielsbeke (BE)
(72) Inventor: Nel, Koen, 8710 Wielsbeke (BE); Mouton, Kenny, 8710 Wielsbeke (BE); Vancoillie, Gertjan, 8710 Wielsbeke (BE)
(74) Representative: Unilin Technologies

(57) **Abstract**

A method for producing glue-coated lignocellulosic material (1), wherein a glue (2) is applied upon lignocellulosic material (3) to form glue-coated lignocellulosic material (1), wherein said glue (2) comprises at least a first component (4) which is a dispersion of at least a raw material comprising amino acids and/or molecules containing amino acids, in water, and a second component (5) comprising isocyanates, wherein said first and second component (4, 5) are stored separately and said first and second component (4, 5) are brought to a continuous mixing unit (8), wherein said continuous mixing unit (8) continuously forms said glue (2) with the isocyanate being present in dispersed form, and method for producing a board material (10) with said glue-coated lignocellulosic material (1), and board material (10).

## Description

The present invention relates to a method for producing glue-coated lignocellulosic material, wherein a glue is applied upon lignocellulosic material, for example lignocellulosic particles such as wood chips and/or wood fibers, to form glue-coated lignocellulosic material, wherein said glue comprises at least a first component which is a dispersion of at least a raw material comprising amino acids and/or molecules containing amino acids, in water, and a second component comprising isocyanates, wherein said first and second component are brought together to form said glue. The present invention also relates to a method for producing board material, wherein lignocellulosic material, for example lignocellulosic particles such as wood chips and/or wood fibers, and a glue are brought together in a continuous gluing unit, such as a glue coater or a blowline or a glue spraying device, to continuously form glue-coated lignocellulosic material, wherein said glue-coated lignocellulosic material is pressed to form said board material, and wherein said glue comprises at least a first component which is a dispersion of at least a raw material comprising amino acids and/or molecules containing amino acids, in water, and a second component comprising isocyanates, wherein said first and second component are brought together to form said glue. The invention also relates to board material and a panel comprising said board material.

This invention relates to boards obtained from board material, such as particle boards, oriented strand boards (OSB), fiber boards, for example wood fiber boards such as MDF (medium-density fiberboard) or HDF (high-density fiberboard) or plant fiber boards such as flax boards or hemp boards, plywood, high pressure laminate (HPL) or compact laminate. This invention can also relate to panels comprising a substrate, such as a particle board substrate or a wood fiber board substrate, which is derived from a said board material, and at least one decorative layer and/or protective layer, wherein said panels can be floor panels, furniture panels, wall panels or construction panels. This decorative layer can comprise one or several paper layers impregnated with a resin and/or a timber layer and/or thermoplastic layers and/or other layers. Said protective layer can be a resin impregnated paper and/or a lacquer layer and/or a coating. Preferably this invention relates to particle boards and to wood fiberboards or panels comprising particle board or wood fiberboard. Another term for particle boards is chip boards.

Said board material is often manufactured by pressing, for example in a continuous press or in a discontinuous press. The pressing conditions, such as time, pressure and temperature have a major influence upon the quality of the board material. Of course the choice of raw material to form said board material also has a major influence. The internal bond, the bending strength and the density, are important characteristics. The aim is to obtain board material with the desired characteristics, thus good quality board material, and this in a sustainable, healthy and economic manner. Preferably the speed of production is as high as possible. During production of said board material, there can be emissions of harmful substances, such as formaldehyde. These emissions are preferably as low as possible. Also when said board material is being used, for example is being used indoor, it is preferred that the emission of harmful substances is as low as possible. Further it is desirable to make use of high amounts of bio-based and/or recyclable raw material.

A glue often used in the production of said board material is an aminoplast polymer, produced by a polycondensation reaction from urea and formaldehyde to a urea formaldehyde glue (UF glue). Optionally melamine is added and a melamine urea formaldehyde glue (MUF glue) is obtained, or melamine and/or phenol are added, for example to obtain melamine urea phenol formaldehyde glue (MUPF glue). The great advantages of these glues are their low cost - on account of the use of generally available and cheap raw materials in their preparation -; and their high reactivity, such that high production speeds can be obtained. Glues of this kind may release formaldehyde during and after polymerization, under the effect of temperature, moisture, or pH change. Formaldehyde-free glues for producing the aforementioned boards have been found, but it is not possible or more difficult to obtain a sufficient speed of production and/or these formaldehyde-free glues can have safety issues.

For the production of HPL and compact laminate, glues are used to impregnate/coat the paper layers/cardboards layers of said HPL/compact laminate during production. Said glues are often indicated as resins. The terms "glue" and "resin" are used interchangeably in this application. Glues comprising formaldehyde, such as melamine glues (melamine formaldehyde glues, MF glue) and/or phenol glues (phenol formaldehyde glues, PH glues) are often used. The drawback of these glues is that they can be the cause of high formaldehyde emissions and/or use of said glues during production poses safety risks. Formaldehyde-free glues have been and are being sought for the production of above-mentioned laminates.

Formaldehyde-free glues, such as glues comprising polymeric methylene diphenyl diisocyanate (pMDI), are known. For example pMDI can be used in combination with water glass, such as described in WO 2024/061769.

It is therefore an object of the invention to have a method for producing said glue-coated lignocellulosic material and said board material, which solves one or more of the above mentioned problems.

The invention, according to a first aspect, relates to a method for producing glue-coated lignocellulosic material, wherein a glue is applied upon lignocellulosic material, for example lignocellulosic particles such as wood chips and/or wood fibers, to form glue-coated lignocellulosic material, wherein said glue comprises at least a first component which is a dispersion of at least a raw material comprising amino acids and/or molecules containing amino acids, in water, and a second component comprising isocyanates, wherein said first and second component are brought together to form said glue, wherein said first and second component are brought to a continuous mixing unit which continuously forms said glue, with the isocyanate being present in dispersed form in the glue, preferably in emulsified form. Preferably said first and second component are stored separately in respectively a first and a second storing unit, and said first and second component are brought from said first and second storing units to the continuous mixing unit, wherein said continuous mixing unit continuously forms said glue, with the isocyanate being present in dispersed form in the glue, preferably in emulsified form.

With isocyanates are indicated isocyanates and/or derivates of isocyanates. With derivates of isocyanates can be indicated isocyanates which have been chemically altered to provide said isocyanates with certain characteristics, e.g. to improve the emulsification of said isocyanates in water and/or to make the isocyanates more or less reactive. The derivates of isocyanates can be emulsifiable isocyanates. The second component comprises said isocyanates. Preferably the second component comprises substantially isocyanates, for example comprises at least 80 wt% of isocyanates, preferably comprises at least 90 wt% of isocyanates, more preferably comprises at least 95 wt% of isocyanates, most preferably at least 99 wt% of isocyanates. The second component can also consist of isocyanates. Preferably said second component is a liquid with the isocyanates being present in liquid form.

Said isocyanates preferably have an NCO value of at least 28%, more preferably at least 30%, for example 31% or 32%. This can be measured by DIN EN ISO 14896:2009 for the determination of the isocyanate content.

The first component is a dispersion, with said raw material being dispersed in the water. The first component can also comprise further raw materials, which can also be dispersed in the water.

The glue as such is preferably a water-based dispersion, with the raw material and the isocyanates being dispersed in the water. Preferably said glue comprises between 40 and 70 wt% of water, for example between 45 and 65 wt% of water.

After manufacturing said glue-coated lignocellulosic material, the glue of said glue-coated lignocellulosic material will normally be cured, for example with aid of heat pressing in a discontinuous press -e.g. a single daylight press or a multidaylight press-, or, more preferably, in a continuous press -e.g. in a double belt press or between pressing rolls-. This method can thus be part of a method for manufacturing a board material, such as a particle board material, a wood fiberboard material, an OSB material, a plywood. This method can also be part of a method for manufacturing a board material, such as a HPL or a compact board. This method can be part of a method for manufacturing a decorative panel, wherein a said glue-coated lignocellulosic material is a glue-coated wood veneer, or a glue-coated paper, which is than applied upon a substrate, and/or wherein a said glue-coated lignocellulosic material forms a board material, such as a fiberboard or particle board, wherein a decorative layer is then applied upon said board material.

The major benefit of this method is that the isocyanate, comes into contact with the first component of the glue shortly before applying said glue upon the lignocellulosic material. The risk of prepolymerisation, e.g. unwanted chemical reactions before it is desired that curing of said glue starts, is therefore low. Further because said isocyanates are present in dispersed form in the glue, lower amounts of isocyanates can be used to obtain board material with the desired characteristics, this because said isocyanates can be homogeneously spread upon the lignocellulosic material. Isocyanates are harmful substances in production, such that precaution measures need to be taken when using this material. For example sufficient ventilation is needed and trained personnel is needed. Further isocyanates are often not bio-based, such that lower amounts of isocyanates are desirable. The first component comprising said raw material with amino acids and/or molecules containing amino acids, can more easily be bio-based. For example said raw material can comprise grinded plant material, such as plant flours or can comprise polyamides obtained by polymerisation of amino acids, such as polylysine. Plant flours can be pea flour, guar flour, canola flour, wheat flour, etc. Polylysine can be obtained by polymerisation of substantially lysine and optionally other amino acids, wherein said lysine and optionally other amino acids can be produced by micro-organisms.

With a continuous mixing unit, wherein said continuous mixing unit continuously forms said glue, is indicated that said first and second component are brought into this mixing unit in a continuous manner and that also in a continuous manner, formed glue is discharged from said mixing unit. The result is that the contact time between the first and second component in said mixing unit is limited, such that unwanted prepolymerisation can be kept low or can even be absent and such that the risk that the dispersed isocyanates, return to an undispersed state, is very low. With the aid of this method, board material with superior characteristics with regard to strength can be obtained in an economic manner. Preferably said first and second component are each separately brought into this mixing unit, for example are each applied with a pipe that directly connects to said mixing unit. However it is not excluded that said first component and second component are first brought together and subsequently are brought into said continuous mixing unit, e.g. said first component and said second component can each by applied by a separate pipe into a main pipe, which main pipe connects to said mixing unit. A continuous mixing unit can also be very well implemented in a continuous process. For example to form particle board material or wood fiberboard material, a continuous process is desirable. Further, with the aid of a continuous mixing unit, as opposed to a discontinuous mixing unit -e.g. a batch mixing unit-, the isocyanates will have similar contact times with the material of the first component, such that a very uniform glue can be produced and the glue-coated lignocellulosic material can be made uniformly. With the aid of said continuous mixing unit, the isocyanates are in dispersed form, preferably an emulsified form, such that even with low amounts of said isocyanates, the isocyanates are well distributed over the lignocellulosic material.

The presence of isocyanates is beneficial for the water resistant properties of board material produced with these glue-coated lignocellulosic material.

Preferably, the dispersion of said isocyanates in the first component, e.g. the water of the first component, is such that 99 wt% of the isocyanates have a particle size/droplet size of less than 10 micrometer, preferably less than 5 micrometer, preferably less than 1 micrometer. This can be measured by laser scattering and/or dynamic light scattering.

Preferably said lignocellulosic material comprises or is lignocellulosic particles. Said lignocellulosic particles can be chosen from the list of: wood chips, wood fibers, wood shavings, non-wood lignocellulosic fibers such as hemp fibers or flax fibers. The lignocellulosic material can comprise different types of lignocellulosic particles. The glue-coated lignocellulosic material, can for example be:
- glue-coated wood chips to form particle board;
- glue-coated wood fibers to form wood fiberboards, such as MDF or HDF;
- glue-coated wood shavings to form OSB;
- glue-coated flax fibers to form flax boards.

The lignocellulosic material can comprise or be wood veneers. For example glue-coated wood veneers can be used to form a plywood board comprising two or more wood veneers. Said wood veneers are then attached to each other with said glue, wherein said glue is for example sprayed or nebulized upon a said wood veneer. Preferably, a stack of veneer layers with said glue between two consecutive veneer layers is formed and pressed to form said plywood board.

High Pressure Laminates (HPL) are built up from several sheets, for example paper sheets or cardboard sheets, preferably glue-impregnated sheets. Compact laminate also comprises several glue-impregnated sheets, for example glue-impregnated paper sheets or cardboard sheets. Said glue-impregnated sheets can also be indicated as glue-coated sheets according to the invention. For glue-impregnated sheets, said glue is present in the core of said sheets but often also upon the surfaces of said sheets. Said glue-impregnated sheets can each comprise one type of glue, but can also comprise two or more types of glues. For example a glue-impregnated sheet can be formed by impregnating said sheet with a first glue, optionally followed by further coating with again the first glue or with a second glue. A HPL for example comprises several kraft papers, a decor paper -e.g. a printed paper or a paper with a uniform color -for example coloured in its mass with a uniform color- and optionally a protective translucent/transparent paper. Said papers are preferably glue-impregnated papers and said HPL is produced by pressing the various sheets of the HPL together under temperature and pressure, resulting in curing of the glue. At least one of the above-mentioned glue-impregnated sheets can be a glue-coated paper or cardboard obtained by a method according to the first aspect of the invention, and can thus be a glue-impregnated paper or cardboard according to the first aspect of the invention. For example, a said glue-impregnated sheet according to the first aspect of the invention, can be obtained by coating one or both of the outer surfaces of said sheets with the glue and/or by transporting the sheet trough an impregnation bath comprising the glue. If a said impregnation bath is used, said impregnation bath is preferably continuously replenished by glue from said continuous mixing unit, preferably in such a manner that the 'first in first out principle' for the glue is used. For example the sheet can be a paper layer and said glue can be sprayed upon at least one surface of the paper layer and/or said paper layer can be submerged in an impregnation bath comprising said glue. A HPL or compact laminate can only comprise glue-coated sheets according to the first aspect of the invention, however a HPL or compact laminate can also comprise glue-coated sheets impregnated and/or coated with another glue, for example a MF glue or a PF glue or an acrylate glue or a polyester glue. A HPL or compact laminate can also comprise glue-coated sheets according to the first aspect of the invention, which further comprise a second glue. For example the sheets can be impregnated with the glue of the first aspect of the invention and coated with another glue or said sheets can be first impregnated with a said another glue and then coated with the glue of the first aspect of the invention.

A panel can comprise one type of glue-coated lignocellulosic material according to the first aspect of the invention. A panel can also comprise two or more types of glue-coated lignocellulosic material according to the first aspect of the invention. For example a panel can be made from glue-coated wood chips and one or more glue-coated papers/veneers or can be made from glue-coated wood fibers and one or more glue-coated papers/veneers.

Said glue-coated lignocellulosic material can also form a decorative layer of a decorative panel and/or a balancing layer. For example said glue-coated lignocellulosic material can be a glue-coated wood veneer which is attached with the aid of said glue to a substrate. Or said glue-coated lignocellulosic material can be a glue-impregnated paper layer which is attached to a substrate, for example to form a direct pressure laminate (DPL).

A decorative panel can comprise at least two types of glue-coated lignocellulosic material according to the first aspect of the invention. For example said decorative panel can comprise at least a substrate and a decorative layer, with the substrate being a particle board or wood fiber board obtained by glue-coated lignocellulosic material according to the first aspect of the invention, and with the decorative layer comprising glue-coated sheets according to the first aspect of the invention and/or comprising a glue-coated wood veneer according to the first aspect of the invention.

Preferably, to form said glue-coated lignocellulosic material, said glue is added to said lignocellulosic material in such an amount that at least 100 kg of water is added per 1000 kg of dry matter weight lignocellulosic material, more preferably at least 120 kg of water, for example 125 kg or 130 kg or 135 kg or 140 kg of water. Also preferably, to form said glue-coated lignocellulosic material, said glue is added to said lignocellulosic material in such an amount that at most 200 kg of water is added per 1000 kg of dry matter weight lignocellulosic material, more preferably at most 160 kg of water. In this manner, sufficient water is present for performing good pressing operations. If said glue comprises for example 60 wt% of water, this means that at least 16,7 wt% of glue, e.g. 6,7 wt% of dry matter weight glue has to be used upon dry matter weight lignocellulosic material.

To form said glue-coated lignocellulosic material, preferably between 3 and 10 weight percentage of dry matter weight glue upon dry matter weight lignocellulosic material is used.

For example if the said glue-coated lignocellulosic material is being used to form layers of a particle board, for example layers of a three layered particle board comprising two outer layers and one central layer located between said two outer layers, the following amounts of dry matter weight glue upon dry matter weight wood chips can be used:
Between 4 and 6 wt% of dry matter weight glue upon dry matter weight wood chips for the central layer, e.g. 5 wt%.

Between 6 and 8 wt% of dry matter weight glue upon dry matter weight wood chips for a said outer layer, e.g. 7 wt%. Typically the thickness of a said outer layer is smaller than the thickness of the central layer. Also typically, the weight percentage of glue of a said outer layer is higher than the weight percentage of glue of the central layer. Also typically, the wood chips of a said outer layer are finer (less coarse) than the wood chips of the central layer. Preferably a said outer layer takes up between 4 and 20 percent of the total thickness of the particle board. Also preferably the central layer takes up between 60 and 90 percent of the total thickness of the particle board.

The glue itself is preferably made by adding the following together (based on the total weight of the glue):
1) between 15 and 30 wt% of a powder comprising carbohydrates and proteins, such as a flour, for example between 17 and 25 wt%, with said powder being the raw material comprising amino acids and/or molecules containing amino acids and this because proteins are molecules containing amino acids;
2) between 40 and 70 wt% of water, for example between 45 and 60 wt%;
3) between 3 and 10 wt% of water glass 40%, for example between 4 and 9 wt%. Water glass being a combination of Na₂O and SiO₂ in water, and with 40% indicating that there is 60% by weight of water and 40% by weight of solid matter;
4) between 15 and 25 wt% of pMDI, for example between 17 and 22 wt%, with pMDI being said isocyanates of the second component.
wherein preferably 1), 2) and 3) form the first component and 4) forms the second component. With relatively low amounts of pMDI sufficient bending strength is obtained.

Preferably, for the glue, the ratio by mass of the isocyanates to the mass of the raw material comprising amino acids and/or molecules containing amino acids, is between 0,6 and 1,4, preferably between 0,8 and 1,2, for example 1. For example if the board material is a three layered particle board, said three layers can be formed by three layers of glue-coated lignocellulosic material, wherein for the outer layers the ratio by mass of the isocyanates to the mass of the raw material comprising amino acids and/or molecules containing amino acids is between 0,9 and 1,1 and is preferably 1 and wherein for the central layer said ratio is between 0,7 and 0,9, preferably 0,8. This can lower the price of the adhesive, since the second component normally is expensive.

The solid content in the glue is preferably between 25 and 60 % by mass, preferably between 35 and 50 % by mass, for example 40 % or 45 %.

With said second component comprising isocyanates, is indicated that said second component comprises isocyanates and/or derivates of isocyanates. Said raw material comprises amino acids and/or molecules containing amino acids. For example said raw material comprises proteins and/or denaturated proteins and/or fermented proteins and/or polyamides obtained by polymerisation of amino acids.

In a preferred embodiment the glue is applied upon the lignocellulosic material by bringing said lignocellulosic material and the glue together using a continuous gluing unit, such as a glue coater or a blowline of a glue spraying device, wherein said continuous mixing unit connects to said continuous gluing unit to transport said glue from the continuous mixing unit to the continuous gluing unit, and wherein preferably said continuous mixing unit and the continuous gluing unit form part of a continuous production line. By also having said continuous gluing unit, the risk of unwanted prepolymerisation is further reduced and it can be ensured that the time between the production of said glue and gluing of said lignocellulosic material can be kept low, for example can be less than 30 minutes, preferably less than 10 minutes, more preferably less than 5 minutes.

In a very preferred embodiment the isocyanates are chosen from the list of: di-isocyanates, multi-isocyanates, derivates of di-isocyanates and derivates of multi-isocyanates. With derivates of di-isocyanates or derivates of multi-isocyanates can be indicated di-isocyanates or multi-isocyanates which have been chemically altered to enhance emulsification in water and/or to alter the reactivity, for example which have been treated with polyols to enhance the emulsification in water. Such derivates can thus be emulsifiable isocyanates or water emulsifiable isocyanates. The benefit of having di-isocyanates or derivates of di-isocyanates, is that these have two active isocyanate groups, such that their reactivity is sufficiently high, and pressing times can be reduced. However the reactivity is not too high, such that unwanted prepolymerisation is low.

In a specific embodiment of the first aspect of the invention, the isocyanates are polymers of methylene diphenyl diisocyanate (MDI) and/or a derivates of polymers of MDI, for example polymeric methylene diphenyl diisocyanate (pMDI). A limited amount of isocyanates is needed if use is made of such isocyanates. pMDI and/or derivates of pMDI are preferred. Unlike many other isocyanates, pMDI has little to no compatibility with water. In many other types of isocyanates, water can react with the isocyanate groups, resulting in the release of carbon dioxide. Since pMDI and water show little or no compatibility, there is only a limited reaction when water and pMDI come into contact. Moreover, pMDI has a large number of reactive groups per molecule. This is advantageous for the adhesive strength since a dense network of crosslinking can be obtained.

In a very preferred embodiment, the isocyanates comprise polymeric methylene diphenyl diisocyanate (pMDI) and/or an emulsifiable isocyanate, for example emulsifiable polymeric methylene diphenyl diisocyanate (eMDI). The amount of reactive isocyanate groups of pMDI has been found to show excellent results with regard to reactivity during pressing and this with a low risk of prepolymerisation. eMDI is more reactive then pMDI. For example the isocyanates of the second component can only comprise emulsifiable isocyanates or can comprise at least 30 wt% or at least 50 wt% or at least 7 wt% of emulsifiable isocyanates.

In a specific embodiment the first component comprises isocyanates different from emulsifiable isocyanates, such as pMDI, and wherein the second component comprises emulsifiable isocyanates, such as eMDI. pMDI is less reactive than eMDI, such that also the first component can comprise pMDI. It has been found that by adding a second component comprising eMDI in the mixing unit, a glue with the desired reactivity is created.

In a specific embodiment the isocyanates of the second component consist of emulsifiable isocyanates, for example consist of eMDI. Emulsifiable isocyanates are very reactive, such that unwanted prepolymerisation would be expected. Surprisingly it was found that by using said continuous mixing unit, unwanted prepolymerisation is limited and the reactivity of the emulsifiable isocyanates can be fully used when pressing said glue-coated lignocellulosic material.

In a very preferred embodiment, the first component comprises water glass. Water glass is a combination of Na₂O and SiO₂ in water. The (molar) ratio between SiO₂:Na₂O, and the mass of solids of the water glass (in water) can vary. For example, water glass 2.0 has a SiO₂:Na₂O molar ratio of 2.0:1. Consequently, 1 gram of water glass 2.0, with a solid content of 40 % by mass, contains 0.13 gram of solid Na₂O. Water glass 3.4, for example, has a SiO₂:Na₂O molar ratio of 3.4:1. Consequently, 1 gram of water glass 3.4, with a solid content of 37 % by mass, contains 0.084 grams of solid Na₂O. Solid sodium silicate typically has a high Na₂O content, which dissolved in water corresponds to water glass 1.0 to 1.5, or in other words a SiO₂:Na₂O molar ratio of 1.0:1 to 1.5:1. In the context of the present invention, "solid content" refers to the percentage by mass of the solids, unless stated otherwise. It has been found that the presence of water glass enhances the emulsification of the isocyanates. This is especially useful if the isocyanates comprise di-isocyanates and/or multi-isocyanates, such as pMDI. If the isocyanates comprise emulsifiable isocyanates, use of water glass can be omitted, however, the presence of water glass can further enhance the emulsification of the emulsifiable isocyanates. Preferably the ratio by mass of the raw material comprising amino acids and/or molecules comprising amino acids, to the mass of solid Na₂O of the water glass is between 60:1 and 6:1, preferably between 50:1 and 7: 1, more preferably from 40:1 and 8:1. Said ratio also ensures good water resistance.

In a very preferred embodiment, the mixing unit is an emulsifying unit, such as an emulsifying homogenizer pump or a high shear mixer. With an emulsifying unit is indicated a unit which enhances/stimulates/enables dispersion, e.g. emulsification, of the isocyanates of the second component into the first component, e.g. the emulsification of the isocyanates of the second component into the water of the first component. With the aid of an emulsifying homogenizer pump, additional pumps to pump the first and/or the second component to the emulsifying unit, are not needed, such that less machinery is needed. Further, said emulsifying homogenizer pump is capable of regulating the emulsification of said isocyanates in a desired manner, capable a regulating the amounts of the first and second component, and is capable of forming a very homogeneous emulsification, such that with this method, very uniform glue-coated lignocellulosic material can be obtained. With the aid of a high shear mixer, preferably a high shear in-line mixer, the particle size of the isocyanates can be very small, such that with very low amounts of isocyanates, strong board material can be obtained. The emulsifying units can also be ultrasonic mixers or high pressure homogenizers.

Instead of having an emulsifying unit, the mixing unit can also be a static mixer. For example if all the isocyanates are emulsifiable isocyanates such as eMDI, or the isocyanates comprise emulsifiable isocyanates, it is not necessary that said mixing unit further enhances emulsification. Of course, a static mixer will also contribute to the emulsification of the isocyanates. Of course, when having emulsifiable isocyanates, use can be made of such an emulsifying unit to further enhance emulsification.

Preferably, said raw material is a powder comprising proteins and carbohydrates. This powder can be obtained by grinding a plant raw material, such as cereals (for example, wheat, rye, barley, millet, rice or oats), maize, beets, nuts (for example, palm nuts or coconuts), seeds (for example, rapeseed, linseed or sunflower seeds) or legumes (for example, soybeans, peas, beans, faba beans), guar plant, canola. The powder can be a combination of two or more of the above. More preferably the powder is obtained by grinding (waste from) agricultural crops, for example (waste from) pulse beans, such as soybeans, peas, faba beans. With waste from agricultural crops can be indicated the plant material that is not used for human and/or animal consumption, e.g. the stems of a (pulse bean) plant. The powder can be a flour, such as cereal flour (for example, wheat, rye, barley, millet, rice or oats), low-grade flour, maize flour, beet flour, nut flour (for example, palm nuts or coconuts), seed flour (for example, from rapeseed, linseed or sunflower seeds) or legume flour (for example, from soybeans, peas, beans, faba beans), guar flour, canola flour. The powder can be a combination of two or more of the above. As generally known, the term flour is used for a powder obtained from grinding a plant raw material. A particularly interesting kind of flour for use in the invention is the so-called `low-grade flour', which is a residual material of the wheat flour production. Due to the browner colour of the low-grade flour, this product is declared unsuitable for the production of wheat bread and is processed as animal feed. Low-grade flour has a higher ratio of proteins to carbohydrates compared to the grain from which it is obtained. Higher ratios of proteins to carbohydrates can lead to better adhesive properties. A preferred embodiment is characterized in that the powder is obtained by a process in which a fermentation is performed on a plant raw material. This allows to prepare the powder from residual/waste flows from the agricultural industry and thus improves the valorisation of these residual/waste flows. In such fermentation processes, microorganisms such as fungi or bacteria convert natural raw materials into powders in aqueous suspension. These powders have a homogeneous combination of carbohydrates and proteins. In the powder, the ratio by mass of the proteins to the mass of the carbohydrates is preferably between 2:1 and 1:30; preferably between 1.5:1 and 1:15, more preferably between 1:2 and 1:10. Typically said powder comprising carbohydrates and proteins, for example said flour, has only limited solubility in water. As a result, the first component is preferably a suspension, with the powder dispensed in the water, with a sufficiently low viscosity and a sufficiently high solid content. This allows the glue to be sufficiently distributed over the lignocellulosic material, for example by spraying or nebulizing the glue. In principle, a water based glue could always have a sufficiently low viscosity by adding sufficient water, but an excess of water can lead to too high pressure build-up when pressing the glue-coated lignocellulosic material. The proteins present in the powder ensure a good insolubility in water at temperatures below 50 °C. At higher temperatures, preferably above 60 °C, the crystalline structure of the carbohydrate can be broken and the affinity of the powder for water increases, with a significant increase in viscosity. The benefit of using said first component and using said continuous mixing unit, is that temperatures can be kept low, such that the viscosity of the glue when it contacts the lignocellulosic material, can be sufficiently low. The first component can be produced by placing the powder in water with the aid of high shear or turbulence, as such forming an aqueous suspension of the powder. If water glass is present in the first component, water glass can be added to the said aqueous suspension of the powder. The water glass interacts with the powder. This results in a moderate increase of viscosity and an activation of the powder. This activation also ensures that the dispersing capacity of the powder is increased and that the addition of the second component at a later stage leads to a homogeneous and stable dispersion. It is an important advantage of the invention that a stable dispersion of the isocyanates in water is obtained. The combination of the powder and the water glass thereby acts as a dispersant for the isocyanates. Addition of the water glass provides for an increased adhesive strength of the powder. When said glue-coated lignocellulosic material is subjected to pressing at elevated temperature, the proteins of the powder are denatured and the carbohydrates lose their crystallinity. Functional groups are also released at this elevated temperature, mainly on the proteins, as a result of which the water glass connected to the powder undergoes a hardening reaction. These functional groups are therefore latent at low temperatures and are only expressed when the glue is heated to temperatures above 50 °C. Since the water glass will also contribute to the adhesive strength, the amount of the isocyanates can remain limited. The amount of water glass is therefore preferably chosen such that the water glass is not only active as a dispersant, but also to a significant extent as an adhesive component. This allows to use less isocyanates, and therefore to obtain a more sustainable and less harmful glue, which can be well dosed and uniformly distributed. It is an important advantage of the invention that the isocyanates not merely act as a chain extender of the powder, but that it is also capable of reacting with the hydroxyl groups of the lignocellulosic material to improve adhesive strength. The water glass can moreover lead to an improvement of the reactivity of hydroxyl groups of wood on the one hand, and the isocyanates on the other hand. The water glass is thus not only active as an emulsifier for the isocyanates. When using the glue and while elevating the temperature during pressing of the glue-coated lignocellulosic material and after evaporation of the water, the dispersion is broken, and the water glass can act as a catalyst for the reaction of the isocyanates with the hydroxyl groups of the lignocellulosic material.

If the raw material is powder comprising carbohydrates and proteins, the D₅₀ value of the particle size distribution by volume of the powder in the first component, measured by laser diffraction (Beckman Coulter laser diffraction device LS 13320), can be less than 200 micrometers, preferably less than 100 micrometers, more preferably less than 50 micrometers, even more preferably less than 30 micrometers. The D₅₀ value is the particle size - expressed in microns - wherein 50 % of the particles are smaller than this value. These embodiments provide better glue stability and good glue efficiency. A preferred embodiment of the first aspect of the invention is characterized in that the D₉₀ value of the particle size distribution by volume of the powder in the first component, measured in by laser diffraction, is less than 200 micrometers, preferably less than 100 micrometers. The D₉₀ value is the particle size - expressed in microns - wherein 90 % of the particles are smaller than this value.

In a specific embodiment, said raw material comprises polyamides which are obtained by polymerization of amino acids, for example hyperbranched polyamides, such as hyperbranched polylysine. Said polymerisation of said amino acids into polyamides is the result of polymerisation reactions, for example is the result of polycondensation. Said amino acids are preferably bio-based, such that the glue is a bio-based resin. For example said amino-acids can be produced with the aid of bacteria. Bacteria, such as Corynebacterium (gram-positive) or Escherichia coli (gram-negative), can produce amino acids by fermentation, for example can predominantly produce lysine or other amino acids. Said other amino acids can be glutamine, histidine, arginine, asparagine. Hyperbranched polyamides (highly branched polyamides) are highly branched three-dimensional macromolecules. High/strong branching means that the polyamides are not linear and it also means that there is a significant number of branchings. This signifies that more than 3, preferably more than 5 and even more preferably more than 10 branchings are present in the polyamide macromolecule. Said hyperbranched polyamides are based on amino acids, for example polycondensed amino acids, wherein these amino acids are for example produced with the aid of bacteria. These are then bio-based hyperbranched polyamides. When use is made of bacteria that for example form mainly lysine and a small proportion of other amino acids such as glutamine, both the lysine and the glutamine can be used for the production of the hyperbranched polyamides, so that an additional purification step of the amino acids is superfluous and the production of the hyperbranched polyamides can take place in an ecological manner. If the amino acids substantially comprise lysine or for example comprise at least 80 weight percentage, preferably at least 90 weight percentage, of lysine, said hyperbranched polyamides can be indicated as hyperbranched polylysine. Said hyperbranched polylysine therefore does not have to consist of lysine, but can also comprise other amino acids. The isocyanates of the second component function as crosslinkers for said polyamides, and can also adhere to hydroxylgroups of the lignocellulosic material.

In a preferred embodiment one or more additives are used chosen from the list of:
- scavengers, such as formaldehyde scavengers;
- water-repellent additives;
- cold-tack enhancers;
- fire-retardant additives;
- wetting agents;
- denaturants;
- catalysts;
- hardeners;
- a soap solution;
wherein preferably the first component and/or the second component comprises at least one additive of said one or more additives.

Additives of said one or more additives can be used in the method according to one or more of the following options:
1) the first component can comprise said additives;
2) the second component can comprise said additives;
3) said additives can be brought to the mixing unit, together and/or at the same time as the first and the second component, such that the glue comprises said additives;
4) said additives can be applied upon the lignocellulosic material before the glue is applied upon the lignocellulosic material, such that the lignocellulosic material upon which the glue is applied, comprises said additives;
5) said additives can brought to the gluing unit, for example together and/or at the same as the lignocellulosic material and the glue, such that the glue-coated lignocellulosic material comprises said additives;
6) said additives can be applied upon a cake comprising said glue-coated lignocellulosic material (see the description of the second aspect of the invention wherein a cake comprising said glue-coated lignocellulosic material can be formed).

In a very preferred embodiment, the first component and/or the second component comprises one or more of said additives.

Preferably said additives are present in the first component. In this way any unwanted reactions or any premature reactions with the isocyanates can be prevented.

Cold tack of said glue-coated lignocellulosic material can be insufficient when no cold tack enhancers are used. The cold tack enhancers can be or comprise wax, such as paraffine. Sufficient cold tack of said glue-coated lignocellulosic material is desirable. For example, if the lignocellulosic material is lignocellulosic particles such as wood chips, wood fibers or wood shavings, it is desirable that said glue-coated lignocellulosic material forms a coherent cake before pressing said glue-coated lignocellulosic material. Especially for glue-coated wood chips enhancement of cold tack is desirable. By having wax, such as paraffine wax, said cold tack is enhanced. Preferably said cold tack enhancers are used according to abovementioned options 1, 3, 4 and/or 5. Most preferably said cold tack enhancers are used according to option 4. If the lignocellulosic material is wood chips, preferably between 0,4 and 1 wt% of wax upon dry matter lignocellulosic material is present in said glue-coated lignocellulosic material, for example 0,6 wt%. Further said wax enhances the water-resistant properties of the board material. Instead of wax, or in addition to wax, other cold tack improvers could be used. Said wax can be added in the form of a wax emulsion.

The water-repellent additives can be chosen from the list of:
- a silicon containing compound, such as fumed silica or silanes or polysiloxanes;
- a metallic soap;
- a thermoplastic material;
- inorganic fillers such as CaCO₃, talc, vermiculite.

Said thermoplastic material can be chosen from the list of: polyvinyl butyral (PVB), ethylene vinyl acetate (EVA), polyvinyl alcohol (PVA), polybutylene succinate (PBS), polyvinyl chloride (PVC), polymethyl methacrylate (PMMA), polyurethane (PU), polypropylene (PP) and polyethylene (PE). Said metallic soaps preferably comprise an aliphatic chain comprising at least 8 carbons, more preferably at least 12 carbons and most preferably at least 16 carbons. More preferably said metallic soaps also comprise one, two or more shorter aliphatic chains, e.g. aliphatic chains with at most 6 carbons, preferably at most 4 carbons. Said metallic soaps can be obtained from animal fats or plant/vegetable fats. The metallic soaps are preferably zinc metallic soaps or calcium metallic soaps or magnesium metallic soaps. An example of possible metallic soaps is zinc stearate. Metallic soaps can contribute to the water resistance of a board material comprising said glue, but can also enhance the soap resistance of a said board. Said water-repellent additives are preferably used according to abovementioned options 1, 3, 4 and/or 5, most preferably according to option 1.

Said glue preferably does not comprise formaldehyde. However formaldehyde-emission can also be the result of the used lignocellulosic material. Lignocellulosic material naturally comprises formaldehyde. Said lignocellulosic material can comprise a certain amount of recycled lignocellulosic material, which can have higher amounts of formaldehyde than virgin lignocellulosic material. Said recycled material can be derived from solid wood waste, particle board waste, wood fiber board waste, etc. For the production of particle boards, it is known to make use of wood chips derived from old particles boards and/or other wood waste. This recycled material often comprises a higher amount of formaldehyde and/or emits a higher amount of formaldehyde. This means that, even when formaldehyde-free glues are used, formaldehyde-emissions remains an issue. To avoid harmful emissions, scavengers can be added to the first component and/or the second component. Said scavengers can be added to the first component. Said scavengers remove/neutralize harmful substances, such as formaldehyde, during production and/or when using said board material. The scavengers preferably comprise one or more of the list of: scavengers comprising sulphite, such as metabisulphite, bisulphite, e.g. sodium metabisulphite, sodium bisulphite, sodiumsulphite or potassium metabisulphite, potassium bisulphite or potassium sulphite, or scavengers comprising urea. Metabisulphite has been found to be a very suitable scavenger for formaldehyde. Other possible scavengers are tannines, ammonium salts, melamine, acetoacetamide, polyamine, compounds containing a bisulphite anion, compounds containing free or protected primary/secondary amines. Said scavengers are preferably used according to abovementioned options 1, 3, 4, 5 and/or 6, most preferably according to option 6. For example said scavengers can be scattered during cake formation. For example if a multi-layered cake is formed comprising at least two layers of glue-coated lignocellulosic material, said scavengers can be scattered such that the scavengers are substantially present between said two layers of glue-coated lignocellulosic material. The benefit is that less or no scavengers can be present in the glue, such that said scavengers do not negatively influence the glue, e.g. by having unwanted reactions with components of the glue.

The fire-retardant additives are preferably chosen from the list of: phosphates, such as ammonium phosphates or magnesium phosphates or aluminum phosphates, sulphates, such as magnesium sulfate, sulfamates, aluminum trihydrate, huntite, magnesite, antimony oxide, borax, phosphorous salts. The fire-resistant additives can or cannot be a combination of the above mentioned examples. Said scavengers are preferably used according to abovementioned options 1, 3, 4, 5 and/or 6, most preferably according to option 3.

The denaturants can be chosen from the list of: aldehydes, such as glyoxal or hexamethylene diamine (HDMA), urea, urease or other enzymes, sulphites or sulphates. If the raw material comprises proteins, said denaturants can help to enhance the dispersion of said proteins into water, and this by denaturing the proteins, preferably in a small amount. Said denaturants are preferably used according to option 1.

A soap solution can reduce sticking of the glue-coated lignocellulosic material to pressing elements. Said soap solution is preferably used according to option 6.

Wetting agents are preferably used according to option 4.

Some additives can have multiple functions, e.g. wax can improve the cold-tack and the water-repellent properties and it can help in preventing dehydration of the glue-coated lignocellulosic material. Urea can function as formaldehyde scavenger, but can also aid dispersion of the raw material in the first component.

It is not excluded that the glue contains additional additives, such as hardeners to improve the curing, such hardeners can be based on for example carbodiimides, aziridine, epoxy, etc. Other possible additives are colorants, pigments, antifungal additives and antimicrobial additives, thermoplastic additives with adhesive properties -preferably a bio renewable thermoplastic additive, such as an aqueous dispersion of polylactic acid or a natural latex. The use of thermoplastic additives with adhesive properties allows to reduce the amount of isocyanates. The additives can also comprise catalysts to accelerate and improve the reaction between the hydroxyl groups of the lignocellulosic material and the isocyanates, such as are tertiary amines and derivatives of tin.

Preferably said additives take up at most 0,3 wt% of the total weight of the glue-coated lignocellulosic material. If said additives are used according to one or more of the above-mentioned options 1, 2 and 3, which result in a said glue comprising said additives, then preferably said additives take up at most 3 wt% of the total weight of the glue.

The invention, according to a second aspect, relates to a method for producing board material, wherein a first lignocellulosic material, for example lignocellulosic particles such as wood chips and/or wood fibers, and a first glue are brought together using a continuous gluing unit, such as a glue coater or a blowline or an impregnation bath or a glue spraying device, to form a first glue-coated lignocellulosic material, wherein said first glue-coated lignocellulosic material is pressed to form said board material, and wherein said first glue comprises at least a first component which is a dispersion of at least a raw material comprising amino acids and/or molecules containing amino acids, in water, and a second component comprising isocyanates, wherein said first and second component are brought together to form said first glue, wherein said first and second component are brought to a continuous mixing unit, wherein said continuous mixing unit continuously forms said first glue, with the isocyanates being present in dispersed form, wherein said continuous mixing unit connects to said continuous gluing unit to transport said first glue from the continuous mixing unit to the continuous gluing unit. Preferably said first and second component are stored separately in respectively a first and a second storing unit, and said first and second component are brought from said first and second storing units to the continuous mixing unit, wherein said continuous mixing unit continuously forms said first glue with the isocyanates being present in dispersed form, wherein said continuous mixing unit connects to said gluing unit to transport said first glue from the continuous mixing unit to the gluing unit. Preferably the first lignocellulosic material and the first glue are brought together in a continuous gluing unit, such as a glue coater or a blowline or an impregnation bath, to continuously form first glue-coated lignocellulosic material. If the gluing unit is a glue coater or a blowline or an impregnation bath, said first lignocellulosic material and said first glue are brought together in said gluing unit.

Said first glue-coated lignocellulosic material is preferably manufactured by a method according to the first aspect of the invention. All the above-mentioned specific and/or preferred embodiment of the first aspect of the invention therefore apply mutatis mutandis for this second aspect and vice versa.

Preferably a cake comprising said first glue-coated lignocellulosic material is formed, and said cake is pressed by a pressing device comprising an un upper press element and a lower press element, wherein preferably a release agent is applied upon a surface of the upper press element and/or a surface of the lower press element and/or a surface of said cake, and this to avoid sticking of said first glue-coated lignocellulosic material to a said surface of the upper press element and/or lower press element. The presence of isocyanates can enhance the risk of sticking to the press element. By using a release agent, e.g. by spraying/nebulizing a release agent upon a said press element or upon the cake, or by using a release foil, said risk of sticking is reduced. In addition to a said release agent applied upon the surface of the press element and/or a release foil or instead of said release agent and/or release foil, a release agent, such as a soap solution, can be sprayed upon the surface of the glue-coated lignocellulosic material which will come into contact with a said press element, before pressing and this to avoid sticking. This soap solution could also be seen as an additive as indicated in the first aspect of the invention.

In a specific embodiment, a cake comprising at least three layers is formed, said three layers at least comprising two outer layers and at least one central layer located between said two outer layers, wherein said central layer comprises said first glue-coated lignocellulosic material and wherein said two outer layers comprise a second lignocellulosic material coated with a second glue, said second glue preferably being a glue comprising formaldehyde, such as urea formaldehyde glue or melamine urea formaldehyde glue, and wherein said cake is pressed by a pressing device comprising an un upper press element and a lower press element. Said outer layers can comprise lignocellulosic material coated with a second glue which is different from said first glue and preferably the second glue comprises formaldehyde, such as UF glue or MUF glue or MUPF glue or phenol formaldehyde glue (PF glue) or melamine formaldehyde glue (MF glue). By only having one or more central layers comprising said first glue-coated lignocellulosic material, use can be made of outer layers which have little risk of sticking to the said press elements. The second glue can comprise formaldehyde. The benefit of glues comprising formaldehyde, is that said outer layers are very suitable for further processing steps, for example for adhering other layers, such a resin-impregnated papers layers to said board material, e.g. to form decorative panels. Because only said outer layers comprise said second glue, and said one or more central layers comprise said first glue, formaldehyde emissions are low. Such a board material can for example be three-layered particle board with two outer layers and one central layers located between said two outer layers. Said outer layers preferably comprise finer wood chips, while said central layer comprises more coarse wood chips. When use is made of more coarse wood chips, less glue is needed and also a lighter core is obtained. A board material according to this embodiment, can be produced in a more economic material, since less isocyanates are necessary to obtain said board material and this while having still the desired characteristics with regard to formaldehyde emissions and/or bio-based material. Such a board material can also be a three layered wood fiber board, e.g. a three-layered MDF or HDF, whit two outer layers with a glue comprising formaldehyde and a central layer located between said outer layers comprising said first glue-coated lignocellulosic material. The board material can be produced in a more economic material, since less isocyanates are necessary to obtain said board material and this while having still the desired characteristics with regard to formaldehyde emissions. Said second glue can also be a polyvinyl acetate glue, a polyurethane glue, a poly acrylate glue, a (polymeric) methylene difenyl di-isocyanate glue without said raw material comprising amino acids and/or molecules containing amino acids, a polyvinyl butyral (PVB) glue, a polyurethane (PUR) hotmelt, a polyester glue, a bio-based glue based on for example sugars, lignin, hyperbranched polyamides, etc.

Said outer layers, in another embodiment, can however also comprise a said first glue-coated lignocellulosic material glue. Here with first glue is indicated a first type of glue, e.g. being a glue that is made by mixing said first and second component together. This however does not mean that the composition of said first glue of the outer layer and the first glue of the central layer needs to be completely the same. It is possible that the weight distribution of the composition is different. Also the characteristics of the lignocellulosic material of the central layers and the outer layers can be different.

In a preferred embodiment, a cake comprising said first glue-coated lignocellulosic material is formed, and said cake is pressed by a pressing device comprising an un upper press element and a lower press element, and wherein before pressing by said pressing device, steam is applied trough said cake, for example by steam injection and/or vacuum, said steam preferably comprising at least 95 wt% of water, more preferably at least 99 wt% of water. With the aid of said steam, said cake is preheated and also water is added to said cake. Said water and heat stimulate the curing of said first glue of the first glue-coated lignocellulosic material, such that pressing time can be reduced and this while still having a board material with the desired strength. Said board material can be produced in a very economic manner. For example steam can be supplied to the cake from the top to the bottom, such that gravity contributes to the flow of the steam. Steam can also be supplied form the top and from the bottom. Steam can also be supplied from the bottom to the top. Said steam preferably only comprises water. However said steam can comprise additives to further enhance the pressing and/or to improve the characteristics of the manufactured board material

In a specific embodiment of the invention, in addition to said lignocellulosic material, comminuted particles from waste comprising rigid foam is brought in said continuous gluing unit, and this to obtain glue-coated comminuted particles from waste comprising rigid foam.

In a variant of the invention, instead of lignocellulosic material, comminuted particles from waste comprising rigid foam is brought in said continuous gluing unit, and this to obtain glue-coated comminuted particles from waste comprising rigid foam. Isocyanates are well suited to connect comminuted particles from waste comprising rigid foam. The preferred and other described embodiments of the first and the second aspect of the invention apply mutatis mutandis for this variant.

The invention, according to a third aspect, also relates to a board material comprising lignocellulosic material and a glue comprising isocyanates, wherein said board material is obtained by a method according to the second aspect of the invention.

Said board material is for example a particle board or a wood fiberboard. The board material comprises glue. Said glue is hardened/cured glue. In order to form this board material, use is made of a glue which has not yet hardened/cured or is not yet completely hardened/cured. During manufacturing said board material, the glue will (further) harden/cure so as to give a hardened/cured glue that bonds the lignocellulosic material together. The glue of the board material, means a glue that has undergone hardening/curing during forming of the board, is sufficiently dry and bonds the lignocellulosic material together. This does not mean per se that the glue is completely hardened/cured. Here, a hardened/cured glue may or may not be a fully hardened/cured glue.

Said board material can be a particle board or a wood fiberboard comprising at least three layers, namely two outer layers and at least one central layer located between said two outer layers, wherein said central layer and a said outer layers differ in one or more of the following:
- the amount of lignocellulosic material;
- the amount of glue;
- the type of lignocellulosic material, for example the lignocellulosic material of the central layer can be more coarse than the lignocellulosic material of the outer layer and/or the lignocellulosic material of the central layer can comprise more recycled lignocellulosic particles than the lignocellulosic material of the outer layer;
- the type of glue;
- the thickness.

For example the central layer can comprise said first glue comprising said first component and said second component, e.g. said glue can comprise pMDI and/or eMDI. The outer layers can comprise a formaldehyde based glue such as UF glue, MUF glue or melamine formaldehyde, PF glue, MF glue or MUPF glue. To form said board material, preferably two gluing units are used, one unit wherein wood chips or wood fibers are brought in said gluing unit with a formaldehyde glue to form formaldehyde glue-coated wood chips or wood fibers, and another gluing unit wherein wood chips or wood fibers are brought together in said gluing unit with said first glue to form first glue-coated wood chips or wood fibers. A cake is formed on a transporting belt which connects to a pressing machine, said pressing machine for example comprising a prepress followed by a hot press, for example a double belt hot press, and then said cake is pressed by said pressing machine to form said board material. To form said cake, first a layer of formaldehyde glue-coated wood chips or wood fibers is scattered to form a first layer of the cake, after which a second layer of first glue-coated wood chips or wood fibers is scattered upon said first layer to form a second layer of the cake and then another layer of formaldehyde glue-coated wood chips or wood fibers is scattered upon the second layer to form a third layer of the cake. The benefit of such a board material is that formaldehyde emissions can be very low. Further formaldehyde scavengers can used to further reduce formaldehyde emissions. Said formaldehyde scavengers can be present as additives in said formaldehyde based glue and/or said scavengers can be scattered between a said first and second layer of the cake and/or between said second and third layer of the cake. Said scavengers can thus be present at the desired locations and perform their activity, namely removing/neutralizing harmful substances, at the desired places and this with as little possible negatively influencing other properties such as board characteristics and/or production conditions of said board. For example said formaldehyde scavengers can be located in such a way that said board material can be produced at high speed and this while the board material has the desired technical characteristics, such as internal bond, density, strength, etc. Since said glue of the central layer does not comprise formaldehyde, less formaldehyde scavengers are needed (or no formaldehyde scavengers are needed). Preferably said formaldehyde scavengers take up at most 1 weight percentage, more preferably at most 0,5 weight percentage, most preferably at most 0,25 weight percentage of the total dry matter weight of the obtained board material. For example the weight ratio of scavengers upon the glue of the outer layer is situated between 0,5 % and 15%, preferably between 2 % and 10 %.

The board material formed by the method according to the second aspect of the invention, can be the substrate of a panel, for example the substrate of a decorative panel, such as a floor panel, wall panel, furniture panel or the substrate of a construction panel. It has been found that, if the surface of a board material is made from said first glue-coated lignocellulosic material, said glue thus being said first glue, said surface is very well suited to attach a decorative layer to it. For example said decorative layer can be attached by pressing with heat and/or with the aid of an additional glue. Since this board material has low emissions of harmful substances and can have good technical properties, this board material is very suitable to form decorative panels. Said decorative top layers can comprise one or more resin impregnated papers, wherein the resin is for example a thermosetting resin such as a melamine resin or an acrylate resin. Of course, a said resin can also be a glue comprising said first and second component, such that at least one of said resin impregnated papers is a glue-coated paper according to the first aspect of the invention. Said resin impregnated papers for example comprise a (digitally) printed resin impregnated paper and optionally a translucent/transparent resin impregnated paper (e.g. a wear layer) which can comprise hard particles, such corundum, to provide for additional wear resistance. Said resin impregnated papers can have a uniform color. Said decorative top layer can also be a HPL (high pressure laminate) comprising, in addition to a said printed resin impregnated paper or said resin impregnated paper having a uniform color, one or more resin impregnated kraft papers. The resin of the resin impregnated kraft paper can be a phenol resin.

In a preferred embodiment a said decorative panel is rectangular and comprises two pairs of opposite edges, wherein said at least one substrate layer comprises an exposed portion at least at one of said edges.

Further preferably a said exposed portion is profiled and at least partially forms a first coupling part at the respective edge that allows said edge to be coupled to a second coupling part at the opposite edge of a similar decorative panel, wherein in the coupled condition a locking is obtained between the respective edges in a direction perpendicular to the plane of coupled panels and/or in the plane of coupled panels and perpendicular to the respective edges.

Percentages and amounts used when manufacturing said board material, e.g. with regard to the lignocellulosic material, the glue, the additives, are preferably expressed on the basis of the amounts of dry matter that were provided for manufacturing said board material. This is because during formation of the board the different components will react with each other and there is also evaporation of for example (during production formed) water. However, the formulation of the glue can be based on the total weight, this because the viscosity of the glue, e.g. the amount of water, can have big influence during manufacturing of the board material.

In a specific embodiment the board material is a three-layered material. For this preferably at least three base layers are formed above each other, wherein at least one of said base layers consists of said first glue-coated lignocellulosic material. More preferably said three base layers are all a said first glue-coated lignocellulosic material. These three base layers are pressed together with for example the aid of a continuous press such as a continuous double belt press. Of course pressing can also be done with a discontinuous press. When use is made of a continuous press, a continuous line comprises said continuous press and preferably one or more strewers/scatterers to strew/scatter one or more or all of said base layers. Preferably said base layers are subsequently formed above each other, for example subsequently strewn/scattered above each other. Further said continuous line preferably comprises a bottom belt upon which the base layers are formed above each other and an upper belt, wherein said base layers are pressed together between said lower and upper belt.

Further preferably a sawing unit is present to saw said manufactured board material into boards. Said layers of the boards are thus respectively derived from said base layers.

Said board material as such can form a board. Preferably further process steps are performed upon said board material, such as sawing and/or sanding, to form said boards. The method for manufacturing board material is therefore also a method for manufacturing boards.

With the intention of better showing the characteristics of the invention, herein below, as an example without any limitative character, embodiments of the invention are described, with reference to the following schematic figures:
- ***figure 1*** is a schematic view of a first embodiment according to the first aspect of the invention;
- ***figure 2*** is a schematic view of a second embodiment according to the first aspect of the invention;
- ***figure 3*** is a schematic view of a third embodiment according to the first aspect of the invention;
- ***figure 4*** is a schematic view of a fourth embodiment according to the first aspect of the invention;
- ***figure 5*** is a schematic view of a fifth embodiment according to the first aspect of the invention;
- ***figure 6*** is a schematic view of a sixth embodiment according to the first aspect of the invention;
- ***figure 7*** is a schematic view of the pressing of the glue-coated lignocellulosic material to form a board material according to the third aspect of the invention, said glue-coated lignocellulosic material being obtained by the first aspect of the invention;
- ***figure*** 8 is a schematic view of a cross section of a board material according to the third aspect of the invention.

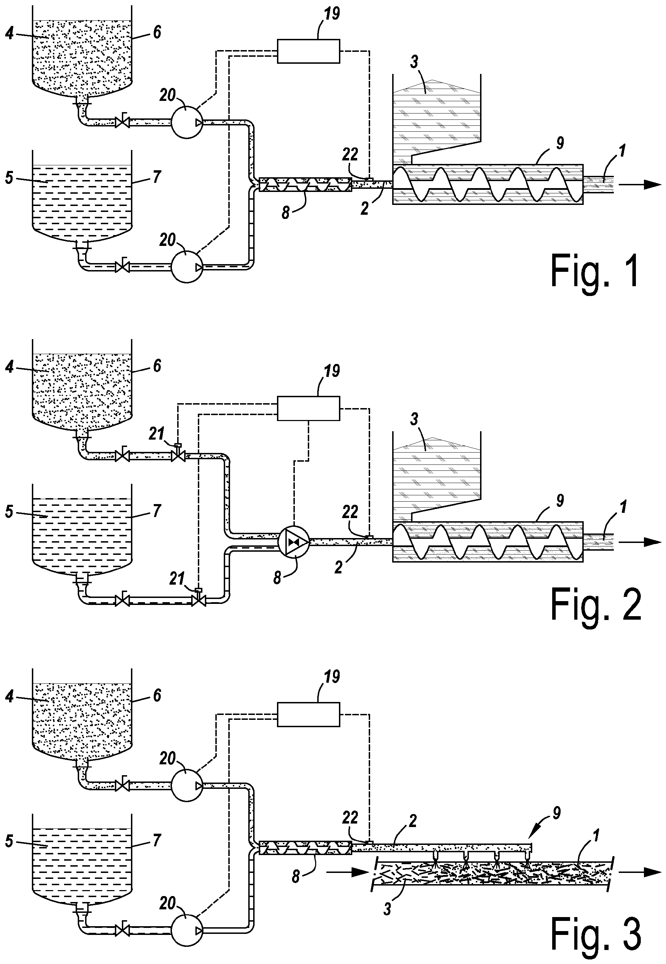

Figures 1 to 6 show different embodiments according to the first aspect of the invention, thus different embodiments to manufacture glue-coated lignocellulosic material 1.

The following is shown for all the embodiments of figures 1 to 6:
A glue 2 is applied upon lignocellulosic material 3, to form glue-coated lignocellulosic material 1. Said glue 2 is made by bringing at least a first component 4, which is a dispersion of at least a raw material comprising amino acids and/or molecules containing amino acids, in water, and a second component 5 comprising isocyanates, together. As can be seen in the figures 1 to 6, said first and second component 4, 5 are stored separately in respectively a first storing unit 6 and a second storing unit 7. Said first and second component 4, 5 are brought from said first and second storing units 6, 7 to a continuous mixing unit 8. Said continuous mixing unit 8 continuously forms said glue 2, with the isocyanate being present in dispersed form, preferably in emulsified form. After formation of said glue 2, the glue 2 is applied upon the lignocellulosic material 3 by bringing said lignocellulosic material 3 and the glue 2 together using a continuous gluing unit 9, such as a glue coater or a blowline or a glue spraying/nebulizing device, wherein said continuous mixing unit 8 directly connects to said continuous gluing unit 9 to transport said glue 2 from the continuous mixing unit 8 to the continuous gluing unit 9, and wherein said continuous mixing unit 8 and the continuous gluing unit 9 form part of a continuous production line.

The flow can be controlled with the aid of measuring devices 22 and control devices 19, which, among others, measure and control the flow of the first component 4, the second component 5 and/or the formed glue 2.

The first component 4 preferably comprises a combination of water, a powder comprising carbohydrates and proteins -such as a flour- and water glass. The first component 4 could also comprise a combination of water, hyperbranched polyamides obtained by polymerisation of amino acids chosen from the list of: lysine, glutamine, histidine, arginine, asparagine, and further water glass.

The second component 5 comprises pMDI and/or eMDI and preferably consists of pMDI and/or eMDI.

For example, if the lignocellulosic material 3 is wood chips, and if said glue-coated wood chips 1 are used to form a particle board 10, the following example is possible:

### Example 1

The particle board 10 is a three-layered particle board with two outer layers 15 and a central layer 16 located between said outer layers 15. Said outer layers 15 comprise wood chips 3 which are finer, thus less coarse, then the wood chips 3 of the central layer 16. The dosage of the glue 2 upon the dry matter weight of the wood chips is different for the outer layers 15 and the central layer 16 and also the composition of the glue 2 is different.

| | Glue composition outer layer (wt%) | glue composition central layer (wt%) |
|---|---|---|
| flour powder, preferably pea flour powder | 18.4 | 24,0 |
| water | 57.5 | 48.1 |
| Water glass 2.0 (40% solids) | 5.7 | 8.7 |
| pMDI | 18.4 | 19.2 |

The first component 4 comprises said flour powder, the water and the water glass.

The second component 5 comprises the pMDI. Further to form the glue-coated wood chips 1 for the outer layers 15, 17,4 weight percentage of glue 2 (total weight of the glue 2) upon dry matter wood chips is used, which corresponds to 6.8 weight percentage of dry matter glue upon dry matter wood chips. For the central layer 16, 10,4 weight percentage of glue 2 (total weight of the glue 2) upon dry matter wood chips is used, which corresponds to 4,86 weight percentage of dry matter glue upon dry matter wood chips.

Said particle board 10 can have a thickness of approximately 18 mm, a density of +/- 750 kg/m³ and a tensile strength of 0,37 N/m² measured according to EN 320:2011.

### Example 2

The wood fiber board 10 is a one layered board. The dosage of the glue 2 upon the dry matter weight of the wood fibers is preferably between 7 and 13 percent by weight.

| | Glue composition (wt%) |
|---|---|
| flour powder, preferably pea flour powder | 9 |
| water | 79 |
| Water glass 2.0 (40% solids) | 3 |
| pMDI | 9 |

When applying the glue 2 upon the wood fibers 3, it is beneficial to have a higher amount of water, for a better distribution of the pea flour powder, the water glass and the pMDI upon the wood fibers. After applying said glue 2 upon the wood fibers 3, said glue-coated wood fibers 1 are dried in such an amount that between 10 and 20 weight percentage of water is left, preferably between 13 and 16 weight percentage. Here there is a sufficient amount of water left to aid in the curing of said glue 2 during pressing of said dried glue-coated wood fibers, but not too much such that it would hinder a good pressing.

The glue 2, for all the embodiment, can optionally comprise additives, wherein said additives preferably take up at most 3 weight percentage of the total weight of the glue 2, more preferably at most 3 weight percentage of the dry matter weight of the glue. The additives can be chosen from the list of:
- scavengers, such as formaldehyde scavengers;
- water-repellent additives;
- wax, for example paraffine wax;
- fire-retardant additives;
- wetting agents;
- denaturants;
- catalysts;
- hardeners.

Of course the amount of scavengers and/or the type of scavengers will depend upon the lignocellulosic material 3 and/or the board material 10 made from said glue-coated lignocellulosic material 1.

The figures show two possibilities for the continuous mixing unit 8, namely a high shear mixer and an emulsifying homogenizer pump. Figures 1, 3 and 5 show the high shear mixer 8 and figures 2, 4 and 6 show the emulsifying homogenizer pump 8.

For the high shear mixer 8, the following applies: The first component 4 and second component 5 are pumped to the high shear mixer 8 with respective pumps 20 and this in the desired dosages with the aid of control devices 19 and measuring devices 22 connected with said control devices 19. In said high shear mixer 8 the first component 4 and the second component 5 come into contact with each other, the high shear aids in emulsifying the pMDI and/or eMDI in the first component 4 and the result is the desired glue 2.

For the emulsifying homogenizer pump 8, the following applies: The first component 4 and second component 5 are transported to said emulsifying homogenizer pump 8 in a controlled manner and this with the aid of control devices 19, measuring devices 22 and valves 21. With the aid of said emulsifying homogenizer pump 8, the pMDI and/or eMDI is continuously emulsified in said first component 4 and the result is the desired glue 2.

For both possibilities, after the formation of said glue 2, said glue 2 is applied upon the lignocellulosic material 3.

In figures 1 and 2, the lignocellulosic material 3 is wood chips. These can be virgin wood chips, or recycled wood chips derived from wood waste, for example end-of-life wood based panels/boards. Whit end-of-life panels/boards are indicated panels/boards of the non-exhaustive list: panels/boards that have been used by an end consumer and/or waste from production and/or waste from installation, shipping, marketing and/or unsold stock. The wood waste can be old particles boards, solid wood waste. The wood chips can also be derived from thinning wood or pruning waste. Said wood chips 3 are brought into a glue coater 9 in which the wood chips 3 are transported with the aid of one or more screws, preferably with the aid of one screw. Said wood chips 3 are for example brought into a funnel of said glue coater 9. In said funnel, additives such as a wax emulsion and/or fire-retardants can be added to the wood chips 3, such that these additives are applied upon the wood chips 3 before applying said glue 2 upon the wood chips 3. During said transport of the wood chips 3, the wood chips 3 are brought into contact with the glue 2, e.g. the glue 2 is sprayed and/or nebulized upon the wood chips 3, such that the glue 2 gets homogeneously spread upon the wood chips 3. The result is glue-coated wood chips 1.

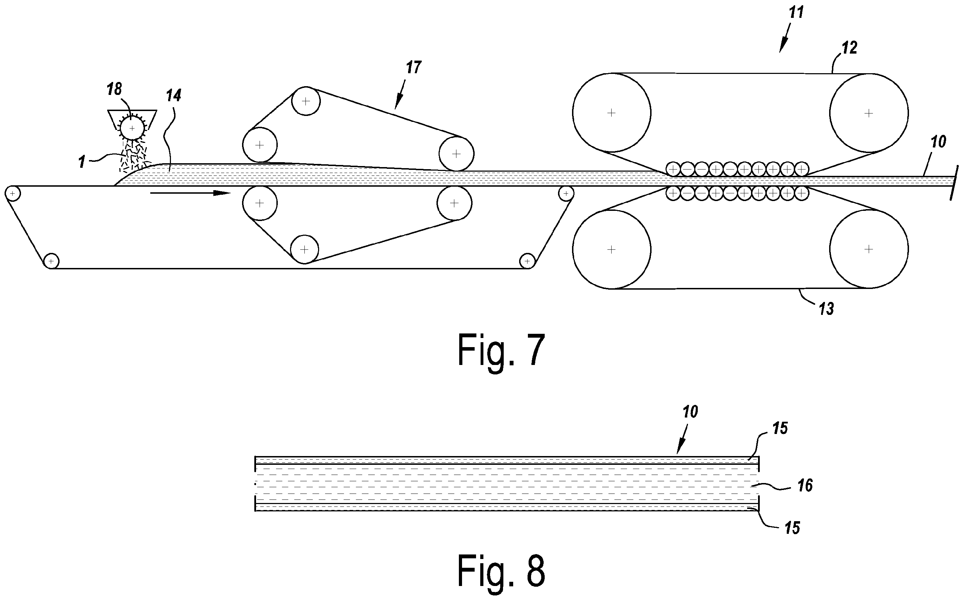

Said glue-coated wood chips 1 can be used to form a one-layered particle board 10. For this, said glue-coated wood chips 1 can be scattered upon a belt of a continuous double belt press, said continuous double belt press comprising a prepress 17 and a double belt heat press 11. This is shown schematically in figure 7. Here a scattering device 18 scatters the glue-coated wood chips 1 upon a lower transport belt as such to form a cake 14. Said cake 14 is firstly prepressed by the prepress 17 to remove air from said cake 14. The prepress 17 is a cold pressing device, e.g. there is no additional heat added. After the prepressing, the cake 14 is further pressed by the double belt heat press 11, comprising an upper belt 12 and a lower belt 13, to form a particle board 10. This double belt heat press 11 adds additional heat, such that the cake 14 is pressed with the aid of pressure and heat. The result is a one-layered particle board 10. Preferably a release agent is sprayed upon the lower belt 13 and also upon the upper belt 12 to avoid sticking of the glue-coated wood chips 1 to the upper and lower belt 12, 13. Additionally between the prepress 17 and the double belt heat press 11, steam can be injected through the cake 14, to preheat the cake 14. Manufacturing a three layered particle board 10 can be done with the same prepress 17 and double belt heat press 11, but instead of forming a one-layered cake 14, a three-layered cake is formed. For example firstly a first type of glue-coated wood chips 1 are scattered to form a thin layer, said first type of glue-coated wood chips 1 comprising finer wood chips, then secondly a second type of glue-coated wood chips 1 are scattered to form a thicker central layer, said second type of glue-coated wood chips 1 comprising coarser wood chips and preferably a glue 2 with another composition than the glue 2 of the first type of glue-coated wood chips 1, thirdly said first type of glue-coated wood chips 1 are scattered upon the thicker central layer to form a thin layer upon said thicker central layer. This three-layered cake is then prepressed and heat pressed and the result can be a particle board 10 as shown in figure 8. Both said first type and said second type of glue-coated wood chips 1, can be glue-coated wood chips 1 according to the first aspect of the invention. The first type of glue-coated wood chips or the second type of glue-coated wood chips can also not be according to the first aspect of the invention, e.g. they can comprise another glue such as a ureaformaldehyde glue.

As can be seen in figure 8, said particle board 10 comprises two outer layers 15 and a central layer 16 between said two outer layers 15. The thickness of said central layer 16 being at least two times the sum of the thicknesses of the two outer layers 15.

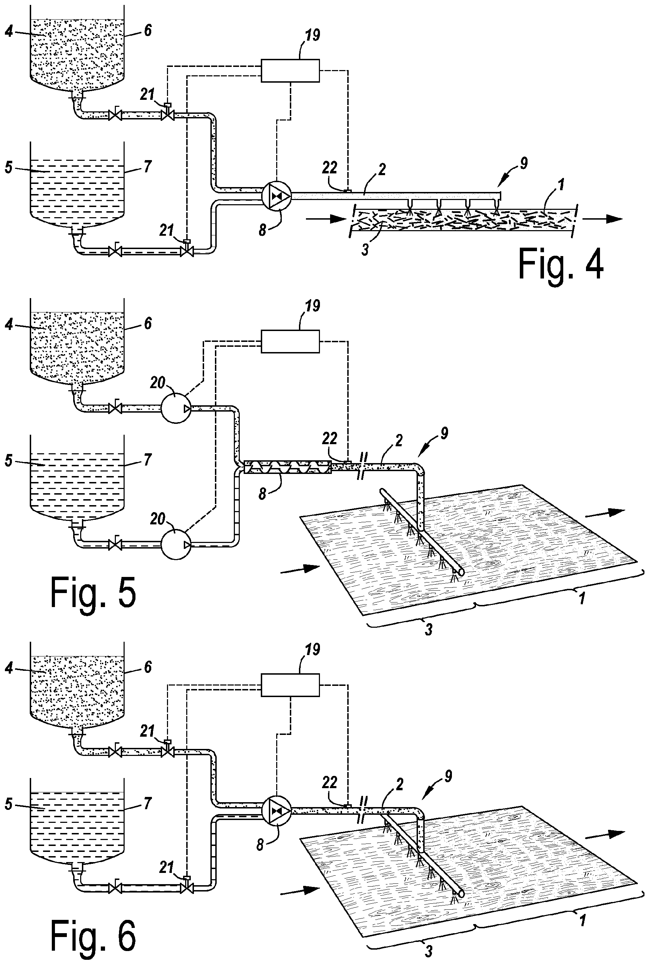

In figures 3 and 4, the lignocellulosic material 3 is wood fibers. These can be virgin wood fibers and/or recycled wood fibers, e.g. recycled wood fibers derived from old wood fiberboards. The gluing unit 9 is a blowline. Said wood fibers 3 are transported in a blowline 9, and said glue 2 is sprayed and/or nebulized in said blowline 9. The result is glue-coated wood fibers 1.

In figures 5 and 6, the lignocellulosic material 3 is a wood veneer or a paper layer. Said paper layer can be a decorative paper layer, a kraft paper layer, a translucent/transparent paper layer, etc. If said lignocellulosic material 3 is a paper layer, said paper layer is preferably supplied in the form of a paper roll. As shown in the figures 5 and 6, the glue 2 is sprayed upon one side of said wood veneer 3 or paper layer 3 with the aid of a glue spraying device 9, such to form glue-coated wood veneer 1 or a glue-coated paper layer 1. The result is a glue-coated wood veneer 1 or a glue-coated paper layer 1. In further processing steps, the side of said wood veneer or paper layer opposite said one side which has been treated with the glue 2, can also be treated with the glue 2. If the lignocellulosic material 3 is a paper layer, in addition to spraying of said glue 2 upon the paper layer 3 or instead of spraying of said glue 2 upon the paper layer 3, use can made of an impregnation bath (not shown in the figures and which is another possibility for the gluing unit) and/or a knife coater (not shown in the figures and which is another possibility for the gluing unit).

The present invention is in no way limited to the herein above-described embodiments. On the contrary, such methods and board material 10 can be realized according to various variants, without leaving the scope of the present invention, as defined by the appended claims.

## Claims

1. A method for producing glue-coated lignocellulosic material (1), wherein a glue (2) is applied upon lignocellulosic material (3), for example lignocellulosic particles such as wood chips and/or wood fibers, to form glue-coated lignocellulosic material (1), wherein said glue (2) comprises at least a first component (4) which is a dispersion of at least a raw material comprising amino acids and/or molecules containing amino acids, in water, and a second component (5) comprising isocyanates, wherein said first and second component (4, 5) are brought together to form said glue (2), **characterized in that** said first and second component (4, 5) are brought to a continuous mixing unit (8) which continuously forms said glue (2), with the isocyanate being present in dispersed form in the glue (2).

2. The method according to claim 1, wherein the glue (2) is applied upon the lignocellulosic material (3) by bringing said lignocellulosic material (3) and the glue (2) together using a continuous gluing unit (9), such as a glue coater or a blowline or a glue spraying device, wherein said continuous mixing unit (8) connects to said continuous gluing unit (9) to transport said glue (2) from the continuous mixing unit (8) to the continuous gluing unit (9), and wherein preferably said continuous mixing unit (8) and the continuous gluing unit (9) form part of a continuous production line.

3. The method according to claim 1 or 2, wherein the isocyanates are chosen from the list of: di-isocyanates, multi-isocyanates, derivates of di-isocyanates, derivates of multi-isocyanates.

4. The method according to any of the preceding claims, wherein the isocyanates comprise polymeric methylene diphenyl diisocyanate (pMDI) and/or an emulsifiable isocyanate, for example emulsifiable polymeric methylene diphenyl diisocyanate (eMDI).

5. The method according to any of the preceding claims, wherein the first component (4) comprises isocyanates different from emulsifiable isocyanates, such as pMDI, and wherein the second component (5) comprises emulsifiable isocyanates, such as eMDI.

6. The method according to any of the preceding claims, wherein the first component (4) comprises water glass.

7. The method according to any of the preceding claims, wherein the continuous mixing unit (8) is an emulsifying unit, such as an emulsifying homogenizer pump or a high shear mixer.

8. The method according to any of the preceding claims, wherein said raw material is a powder comprising proteins and carbohydrates.

9. The method according to any of the preceding claims 1 to 7, wherein said raw material comprises polyamides which are obtained by polymerization of amino acids, for example hyperbranched polyamides such as hyperbranched polylysine.

10. The method according to any of the preceding claims, wherein one or more additives are used chosen from the list of:
- scavengers, such as formaldehyde scavengers;
- water-repellent additives;
- cold-tack enhancers;
- fire-retardant additives;
- wetting agents;
- denaturants;
wherein preferably the first component (4) and/or the second component (5) comprises at least one additive of said one or more additives.

11. A method for producing board material (10), wherein a first lignocellulosic material (3), for example lignocellulosic particles such as wood chips and/or wood fibers, and a first glue (2) are brought together using a continuous gluing unit (9), such as a glue coater or a blowline or a glue spraying device, to continuously form a first glue-coated lignocellulosic material (1), wherein said first glue-coated lignocellulosic material (1) is pressed to form said board material (10), and wherein said first glue (2) comprises at least a first component (4) which is a dispersion of at least a raw material comprising amino acids and/or molecules containing amino acids, in water and, and a second component (5) comprising isocyanates, wherein said first and second component (4, 5) are brought together to form said first glue (2), **characterized in that** said first and second component (4, 5) are brought to a continuous mixing unit (8), wherein said continuous mixing unit (8) continuously forms said first glue (2), with the isocyanates being present in dispersed form, wherein said continuous mixing unit (8) connects to said continuous gluing unit (9) to transport said first glue (2) from the continuous mixing unit (8) to the continuous gluing unit (9), and wherein preferably the first glue-coated lignocellulosic material (1) is produced according to any of the preceding claims 1 to 10.

12. The method according to claim 11, wherein a cake (14) comprising said first glue-coated lignocellulosic material (1) is formed, and said cake (14) is pressed by a pressing device (11) comprising an un upper press element (12) and a lower press element (13), wherein preferably a release agent is applied upon a surface of the upper press element (12) and/or a surface of the lower press element (13) and/or a surface of said cake (14), and this to avoid sticking of said first glue-coated lignocellulosic material (1) to a said surface of the upper press element (12) and/or lower press element (13).

13. The method according to claim 11 or 12, wherein a cake (14) comprising at least three layers is formed, said three layers at least comprising two outer layers (15) and at least one central layer (16) located between said two outer layers (15), wherein said central layer (16) comprises said first glue-coated lignocellulosic material (1) and wherein said two outer layers (15) comprise a second lignocellulosic material coated with a second glue, said second glue preferably being a glue comprising formaldehyde, such as urea formaldehyde glue or melamine urea formaldehyde glue, and wherein said cake (14) is pressed by a pressing device (11) comprising an un upper press element (12) and a lower press element (13).

14. The method according to any of the preceding claims 11 to 13, wherein a cake (14) comprising said first glue-coated lignocellulosic material (1) is formed, and said cake (14) is pressed by a pressing device (11) comprising an un upper press element (12) and a lower press element (13), and wherein before pressing by said pressing device (11), steam is applied trough said cake (14), for example by steam injection and/or vacuum, said steam preferably comprising at least 95 wt% of water.

15. A board material (10) comprising lignocellulosic material (3) and a glue (2) comprising isocyanates, wherein said board material (10) is obtained by a method according to any of the preceding claims 11 to 14, and wherein said board material (10) is for example a particle board material or a wood fiberboard material.
